# EUROPÄISCHE PATENTANMELDUNG

(11) **EP 3 778 179 A1**
(43) Veröffentlichungstag der Anmeldung: **17.02.2021**
(21) Anmeldenummer: 20199243.5
(22) Anmeldetag: 02.03.2012
(51) Int. Cl.: B29C 45/14

(54) **VERFAHREN UND VORRICHTUNG ZUR HERSTELLUNG EINES BAUTEILS**

(30) Priorität: 04.03.2011 DE 102011013131
(62) Teilanmeldung aus: 12707558.8
(71) Anmelder: ElringKlinger AG, 72581 Dettingen (DE)
(72) Erfinder: Hummel, Volker, 73087 Bad Boll (DE)
(74) Vertreter: Hoeger, Stellrecht & Partner Patentanwälte mbB

(57) **Zusammenfassung**

Die Erfindung betrifft ein Verfahren und eine Vorrichtung zur Herstellung eines Bauteils, welches einen von einem Organoblech gebildeten Träger aufweist, an den mindestens eine Kunststoffauflage angeformt ist; zur Erzeugung eines Bauteils, bei dem die Kunststoffauflage mit dem Organoblech-Träger zuverlässig verbunden ist und dessen Form zumindest nahezu präzise einer vorgegebenen Gestaltung entspricht, wird das Organoblech in eine Spritzgussform eingelegt, dann selektiv mindestens eine in der Spritzgussform freiliegende Stelle des Organoblechs, an welche die mindestens eine Kunststoffauflage anzuformen ist, erhitzt, und dann wird bei geschlossener Spritzgussform mittels eines Spritzgussverfahrens die mindestens eine Kunststoffauflage auf die mindestens eine vorerhitzte Stelle des Organoblechs aufgetragen.

## Beschreibung

Die Erfindung betrifft ein Verfahren zur Herstellung eines Bauteils, welches einen von einem Organoblech gebildeten Träger aufweist, an den mindestens eine Kunststoffauflage angeformt ist. Ferner betrifft die Erfindung eine Vorrichtung zur Durchführung dieses Verfahrens und ein nach diesem Verfahren hergestelltes Bauteil.

Organoblech-Bauteile bilden leichte und gleichzeitig mechanisch hochbelastbare Elemente, die insbesondere im Bereich der Kraftfahrzeugindustrie vorteilhaft eingesetzt werden.

Unter einem Organoblech versteht der Fachmann ein Flachmaterial aus einem oder mehreren Kunststoffen und einer in diesen bzw. diese eingebetteten Faserverstärkung aus für Faserverstärkungen üblichen Fasern, welche eine solche Länge aufweisen, dass sich das das Organoblech insgesamt bildende Material nicht in einem Spritzgussverfahren verarbeiten lässt. Insbesondere weisen diese langen Fasern im Organoblech mindestens eine Vorzugsrichtung auf - im Organoblech können die Fasern mehrere übereinander angeordnete Lagen bilden, wobei sich die Vorzugsrichtung der einen Lage von der Vorzugsrichtung in einer anderen Lage unterscheidet. Damit die Fasern zur Herstellung des Organoblechs handhabbar sind, können sie in einen Kunststoff eingebettet sein, der sich von einem anderen Kunststoff unterscheidet, in welchen die gesamte Faserverstärkung eingebettet ist. Vorzugsweise besteht die Faserverstärkung aus sogenannten Endlosfasern, welche zwar nicht tatsächlich endlos sind, sich aber ununterbrochen über die gesamte Abmessung eines vom Organoblech gebildeten Teils erstrecken, wobei diese Abmessung bzw. Abmessungen in derjenigen Richtung bzw. denjenigen Richtungen verläuft bzw. verlaufen, in der bzw. denen das Organoblech im Gebrauch insbesondere auf Zug beansprucht wird. Bei dem Kunststoff bzw. den Kunststoffen handelt es sich insbesondere um Thermoplaste, vor allem wird der Kunststoff, in welchen die gesamte Faserverstärkung eingebettet ist, vorzugsweise von einem thermoplastischen Kunststoff gebildet, während die Fasern in einen im Inneren des Organoblechs liegenden anderen Kunststoff eingebettet sein können, bei dem es sich nicht um einen thermoplastischen Kunststoff, jedoch vorzugsweise um einen solchen Kunststoff handelt, welcher nach einer Erwärmung eine gewisse Flexibilität aufweist, so dass sich das Organoblech im warmen Zustand umformen lässt. Bei besonders vorteilhaften Organoblechen handelt es sich bei dem thermoplastischen Kunststoff, in welchen die gesamte Faserverstärkung eingebettet ist, um ein Polyamid, so dass zumindest die beiden Hauptoberflächen des Organoblechs von diesem Polyamid zumindest überwiegend gebildet werden. Die Faserverstärkung kann aus langen Fasern, Faserbündeln, Rovings oder dergleichen bestehen. Unter dem im Folgenden verwendeten Begriff Matrix ist entweder derjenige Kunststoff zu verstehen, in welchen die gesamte Faserverstärkung eingebettet ist, diese Matrix kann aber auch denjenigen, gegebenenfalls anderen Kunststoff umfassen, in welchen die Fasern zunächst eingebettet werden, um die Faserverstärkung handhabbar zu machen.

Je nach Applikation und geometrischer Gestaltung des Organoblechteils (Trägers) muss dieses eine spezifische dreidimensionale Gestalt aufweisen. Um das Organoblechteil mit der gewünschten Geometrie zu gestalten, wird ein Organoblech-Rohling insgesamt so erwärmt, dass er einen flexiblen, leicht formbaren Zustand ähnlich einem flexiblen Gewebe aufweist. In diesem Zustand lässt sich das Organoblech leicht formen. Nach Abkühlung des Organoblechs, insbesondere bei Raumtemperatur, ist das Organoblech erstarrt und bildet ein biegesteifes, hochbelastbares Teil.

Es ist bekannt, auf ein Organoblechteil eine Kunststoffauflage mit einer Rippenstruktur aufzubringen, wobei die Rippen im Allgemeinen Versteifungen bilden, die die Stabilität des Bauteils weiter erhöhen.

Typischerweise werden die Rippenstrukturen in einem Spritzgussverfahren erzeugt, indem Kunststoff in eine entsprechende Spritzgussform eingespritzt wird. Der einfachste Ansatz besteht darin, auf das erkaltete und erstarrte und damit formstabile Organoblech die Rippenstruktur aufzuspritzen. Vorteilhaft hierbei ist, dass das formstabile Organoblech eine geometrisch genaue Bezugsfläche liefert, auf welche die Rippenstruktur exakt aufgebracht werden kann. Hierbei hat sich jedoch als problematisch herausgestellt, dass die dabei erzeugte Verbindung zwischen dem Organoblech und der Rippenstruktur nicht die gewünschte Stabilität aufweist.

Daher wird in jüngerer Zeit versucht, während des Umformvorgangs des Organoblechs, währenddessen dieses so stark erhitzt ist, dass es ein relativ flexibles Teil bildet, die Rippenstrukturen auf das Organoblech aufzuspritzen, um die Verbindung zwischen den Rippenstrukturen und dem Organoblech zu verbessern. Ein gravierender Nachteil bei diesem Verfahren besteht jedoch darin, dass das Aufspritzen des Kunststoffs zur Ausbildung der Rippenstruktur im erwärmten Zustand des Organoblechs erfolgt, in welchem dieses keine nennenswerte oder nur eine geringe Biegesteifigkeit und Formstabilität aufweist. Daher ist mit einem solchen Verfahren ein reproduzierbares, positionsgenaues Aufbringen der Rippenstruktur auf das Organoblech allenfalls mit einem enormen konstruktiven Aufwand möglich.

Der Erfindung liegt die Aufgabe zugrunde, ein Verfahren und eine Vorrichtung bereitzustellen, welches bzw. welche mit möglichst geringem konstruktivem Aufwand eine präzise und reproduzierbare Herstellung von Bauteilen der eingangs genannten Art ermöglicht.

Diese Aufgabe wird erfindungsgemäß mit einem Verfahren gemäß Anspruch 1 bzw. mit einer Vorrichtung gemäß Anspruch 21 gelöst. Vorteilhafte Ausführungsformen und bevorzugte Weiterbildungen der Erfindung sind in den Ansprüchen 2 bis 20 bzw. 22 und 23 definiert.

Nur vorsorglich wird darauf hingewiesen, dass unter einer Formwerkzeugteile aufweisenden Spritzgussform auch eine solche zu verstehen ist, durch die das in die Spritzgussform eingelegte eigentliche Organoblech nicht umgeformt, sondern nur mit mindestens einer Kunststoffauflage versehen wird.

Die Erfindung betrifft also vor allem ein Verfahren zur Herstellung eines Bauteils, welches einen von einem Organoblech gebildeten Träger aufweist, an den mindestens eine Kunststoffauflage angeformt ist, und im Folgenden wird die Erfindung anhand einer bevorzugten Ausführungsform weiter beschrieben, bei welcher die Kunststoffauflage eine Rippenstruktur aufweist und insbesondere von mehreren separaten Rippen gebildet wird; die Kunststoffauflage kann aber auch eine andere Gestalt, insbesondere eine im Wesentlichen flache Gestalt haben, wenn sie zumindest im Wesentlichen nicht der Versteifung des Organoblechs dient, sondern anderen Zwecken, beispielsweise dazu, durch die Kunststoffauflage das Bauteil mit einem weiteren Bauteil zu verbinden, insbesondere nach Art eines Schweißvorgangs, wenn eine Oberfläche oder ein Oberflächenbereich dieses weiteren Bauteils zumindest im Wesentlichen von einem Kunststoff und insbesondere von einem thermoplastischen Kunststoff gebildet wird, wobei die Kunststoffauflage dann vorzugsweise einen oder mehrere Vorsprünge aufweist, an denen die Kunststoffauflage mit dem weiteren Bauteil verbunden werden kann. Ferner kann die Kunststoffauflage die Gestalt eines oder mehrerer z.B. zapfenförmiger Vorsprünge haben oder mindestens einen solchen Vorsprung bilden, welcher anderen Zwecken dient als einer Verbindung des Bauteils mit einem weiteren Bauteil.

Die Erfindung betrifft also insbesondere ein Verfahren zur Herstellung eines Bauteils bestehend aus einem Organoblech mit einer aus Kunststoff bestehenden Rippenstruktur. Das Organoblech wird in eine Spritzgussform eingelegt. Dann werden selektiv die in der Spritzgussform freiliegenden Stellen des Organoblechs, an welchen die Rippenstruktur anzubringen ist, erhitzt. Dann wird bei geschlossener Spritzgussform mittels eines Spritzgussverfahrens die Rippenstruktur auf die vorerhitzten Stellen des Organoblechs aufgetragen.

Mit dem erfindungsgemäßen Verfahren können auf rationelle Weise Bauteile bestehend aus Organoblech und Rippenstrukturen aus Kunststoff hergestellt werden, wobei besonders vorteilhaft ist, dass die Verbindungen zwischen dem Organoblech und den Rippenstrukturen hochstabil und exakt positioniert sind.

Der Grundgedanke der bevorzugten Ausführungsform der Erfindung besteht dabei darin, dass die Rippenstrukturen auf das zumindest nahezu erstarrte und damit formstabile Organoblech aufgebracht werden, was eine wesentliche Voraussetzung für eine positionsgenaue Anbringung der Rippenstruktur ist. Wesentlich bei dem erfindungsgemäßen Verfahren ist, dass vor dem Aufbringen der Rippenstruktur auf das Organoblech dieses lokal aufgeheizt wird, und zwar selektiv nur an den Stellen, an welchen die Rippenstrukturen später angeordnet sein sollen. Dann wird Kunststoff, und zwar vorzugsweise thermoplastischer Kunststoff, in einem nachfolgenden Spritzgussvorgang exakt auf diese erwärmten Stellen aufgespritzt, so dass dort die Rippenstrukturen ausgebildet werden.

Die erwärmten Stellen des Organoblechs sind so stark aufgeheizt, vorzugsweise auf eine Temperatur oberhalb von 180°C, dass nur an diesen Stellen das Organoblech eine erweichte Schicht bildet, die sich mit dem danach aufgespritzten Kunststoff fest und stabil verbindet. Besonders vorteilhaft bestehen dabei die Rippenstrukturen aus demselben oder einem ähnlichen Kunststoff wie der Kunststoffanteil des Organoblechs, wodurch eine besonders gute Verbindung erhalten wird.

Da nur selektiv diejenigen Stellen des Organoblechs erhitzt werden, wo die Kunststoffauflage aufgebracht wird, verbleibt der gesamte Rest des Organoblechs im erstarrten Zustand, vorzugsweise bei Raumtemperatur. Dieser erstarrte Teil des Organoblechs bildet einen biegesteifen Träger, welcher eine positionsgenaue Aufbringung der Kunststoffauflage, insbesondere der Rippenstruktur gewährleistet. Vorteilhaft hierbei ist insbesondere, dass die Spritzgussform, da das Organoblech größtenteils während des gesamten Prozesses formstabil bleibt, selbst nicht auf hohe Temperaturen aufgeheizt werden muss.

Die lokale Erwärmung nur einzelner Stellen des Organoblechs sowie das anschließende Aufbringen mindestens einer Kunststoffauflage erfolgt in einer Spritzgussform, wodurch die beiden Verfahrensschritte rationell durchführbar sind.

Besonders vorteilhaft weist die Spritzgussform ein Werkzeug mit wenigstens zwei gegeneinander positionierbaren Werkzeugteilen auf. Ein erstes Werkzeugteil weist eine Aufnahme auf, in welcher das Organoblech so einlegbar ist, dass dessen Stellen, an welchen die Rippenstrukturen anzubringen sind, frei liegen. Das weitere Werkzeugteil weist Mittel zur Erzeugung der Rippenstrukturen auf.

Das Aufheizen der einzelnen Stellen des Organoblechs erfolgt bevorzugt mit einem insbesondere inerten Heißgas, insbesondere mit Stickstoff. Damit ist eine positionsgenaue, berührungslose Erwärmung der Stellen des Organoblechs möglich.

Gemäß einer ersten Variante des erfindungsgemäßen Verfahrens wird die selektive Erwärmung von Stellen des Organoblechs mittels eines Heizelements erzeugt. Das Heizelement bildet eine von dem Werkzeugteil unabhängige Einheit.

Dabei weist das Heizelement eine Anordnung von Heißgasauslässen auf, die der Geometrie der Rippenstruktur entspricht.

Insbesondere wird bei auseinandergefahrenen Werkzeugteilen und in der Aufnahme des ersten Werkzeugteils gelagertem Organoblech das Heizelement in die Zwischenräume zwischen die Werkzeugteile eingefahren und vor dem Organoblech so positioniert, dass mit Heißgas aus den Heißgasauslässen das Heizelement selektiv die für die Rippenstruktur vorgesehenen Stellen des Organoblechs aufgeheizt werden.

Das Heizelement bildet eine von der Spritzgussform separate, modulare Einheit, die flexibel handhabbar ist und ohne Beeinflussung des Spritzgussvorgangs in der Spritzgussform einsetzbar ist.

Gemäß einer zweiten Variante der Erfindung sind die Mittel zur selektiven Erwärmung von Stellen des in einem Formwerkzeugteil der Spritzgussform gehaltenen Organoblechs Bestandteil der Spritzgussform. Als Mittel zur selektiven Erwärmung von Stellen des Organoblechs sind Heizkanäle vorgesehen, die den Mitteln zur Erzeugung der Rippenstruktur in dem bzw. den weiteren Werkzeugteilen zugeordnet sind. Die Mittel zur Erzeugung der Rippenstruktur weisen Hohlraumstrukturen auf, in welche Kunststoff eingespritzt wird, um die Rippen auf dem Organoblech auszubilden, wobei die Heizkanäle in diese Hohlraumstrukturen einmünden.

Durch diese Integration der Heizkanäle in ein Werkzeugteil ist konstruktiv gewährleistet, dass die Erwärmung des Organoblechs exakt nur an den Stellen erfolgt, an denen die Rippenstrukturen anzubringen sind. Weiterhin ist vorteilhaft, dass zur selektiven Erwärmung von Stellen des Organoblechs keine unabhängige Einheit eingesetzt wird, die separat ausgerichtet werden muss. Vielmehr sind allein durch Positionieren des weiteren Werkzeugteils zur Durchführung des Spritzgussprozesses die Heizkanäle bereits korrekt zum Organoblech ausgerichtet.

Die vorstehend für eine eine Rippenstruktur aufweisende Kunststoffauflage beschriebenen Merkmale und Vorteile sollen auch für anders gestaltete Kunststoffauflagen gelten, soweit diese Merkmale und Vorteile nicht ausschließlich auf einer Rippenstruktur beruhen, und Gleiches gilt für die später noch folgende Beschreibung von in den beigefügten Zeichnungen dargestellten besonders vorteilhaften Ausführungsformen der Erfindung.

Bei der Durchführung des erfindungsgemäßen Verfahrens wird man das Organoblech meist als vorgeformtes Teil in die Spritzgussform einlegen und ihm durch Schließen der Spritzgussform seine endgültige Gestalt geben, was entweder voraussetzt, dass das Organoblech mit einer über der Raumtemperatur liegenden Temperatur eingelegt oder in der Spritzgussform noch einmal hinreichend erwärmt wird. Zu beachten ist in diesem Zusammenhang, dass im Rahmen der Entwicklung der vorliegenden Erfindung festgestellt wurde, dass sich die Oberflächen eines mit erhöhter Temperatur in die Spritzgussform eingelegten Organoblechs aufgrund ihres Kontakts mit der Spritzgussform verhältnismäßig rasch abkühlen, wenn Letztere Raumtemperatur oder zumindest nahezu Raumtemperatur besitzt. Hieraus wird ersichtlich, welche Bedeutung die selektive Erhitzung des Organoblechs für die Haftung der Kunststoffauflage besitzt.

Ferner wird darauf hingewiesen, dass wenn dem Organoblech erst beim Schließen der Spritzgussform seine endgültige Gestalt gegeben wird, das Material des Organoblechs im Zuge des Schließens der Spritzgussform ähnlich wie bei einem an einem Metallblech durchgeführten Tiefziehvorgang fließt, was zu einer geometrisch nicht definierten Topographie des Organoblechs führen kann. Auch deshalb bringt das erfindungsgemäße Verfahren nicht nur den Vorteil mit sich, dass sich ein besserer Verbund zwischen der Kunststoffauflage und dem Organoblech ergibt, sondern mit Hilfe des erfindungsgemäßen Verfahrens lässt sich die Kunststoffauflage auch besonders exakt am Organoblech positionieren, und zwar ohne großen Aufwand und bei kurzen Taktzeiten.

Erzeugt man die Kunststoffauflage durch Anspritzen an ein Organoblech, solange sich dieses insgesamt auf einer so hohen Temperatur befindet, wie es während oder unmittelbar nach einem Umformvorgang der Fall ist, hat das mit hohem Druck erfolgende Anspritzen des Kunststoffs Deformationen der Oberfläche des Organoblechs zur Folge. Durch die Verwendung des erfindungsgemäßen Verfahrens, nämlich durch das nur selektive Erhitzen der Oberfläche des Organoblechs, das heißt nur eines oder mehrerer verhältnismäßig kleiner Oberflächenbereiche des Organoblechs ergibt sich jedoch ein Bauteil, welches sich dadurch auszeichnet, dass die Oberfläche des fertiggestellten Bauteils in der unmittelbaren Nachbarschaft der Kunststoffauflage bzw. der Rippen ihre vorgegebene Gestalt ohne nennenswerte Deformationen aufweist.

Weitere Merkmale, Vorteile und Einzelheiten der Erfindung ergeben sich aus der beigefügten zeichnerischen Darstellung sowie der nachfolgenden Beschreibung besonders vorteilhafter Ausführungsformen der Erfindung; in der Zeichnung zeigen:
- Figuren 1 bis 6:: Darstellung einer ersten Ausführungsform einer Vorrichtung mit einer Spritzgussform in unterschiedlichen Phasen zur Herstellung eines Bauteils bestehend aus einem Organoblech mit einer Rippenstruktur aus Kunststoff.
- Figuren 7 bis 13:: Darstellung einer zweiten Ausführungsform einer Vorrichtung mit einer Spritzgussform in unterschiedlichen Phasen zur Herstellung eines Bauteils bestehend aus einem Organoblech mit einer Rippenstruktur aus Kunststoff.

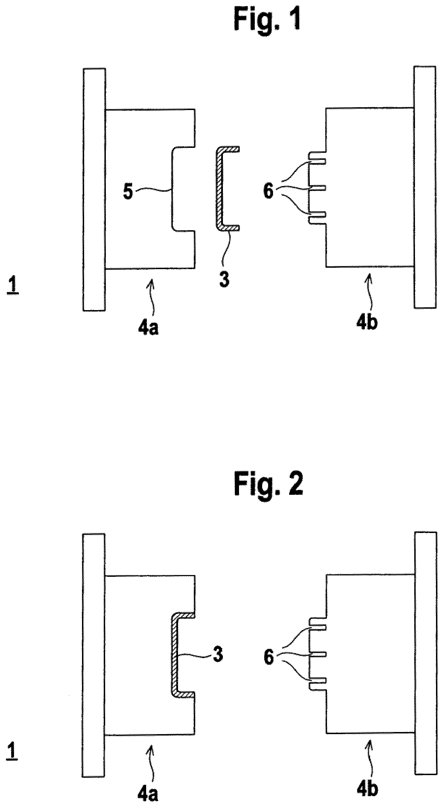

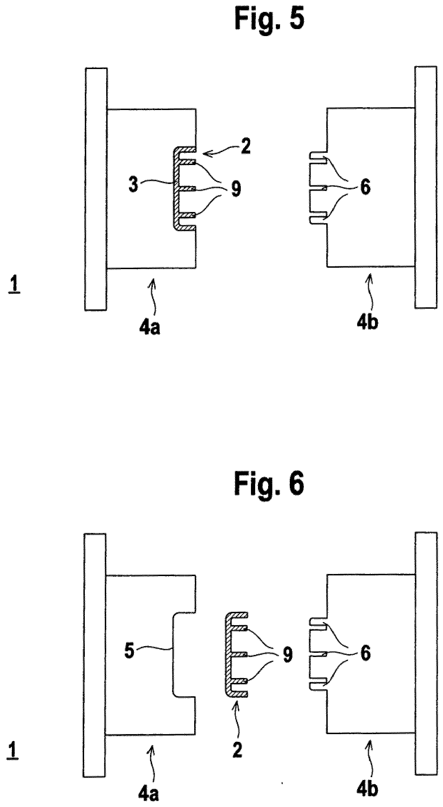

Die Figuren 1 bis 6 zeigen eine erste Ausführungsform einer Vorrichtung mit einer Spritzgussform 1 zur Herstellung eines Bauteils 2 bestehend aus einem Organoblech 3 mit einer Rippenstruktur aus Kunststoff. Figur 1 zeigt das Organoblech 3 vor Bearbeitung in der Spritzgussform 1. Insbesondere Figur 6 zeigt das fertiggestellte Bauteil 2.

Die Spritzgussform 1 umfasst ein Werkzeug mit zwei gegeneinander bewegbaren Werkzeugteilen 4a, 4b. Die Werkzeugteile 4a, 4b können durch einen nicht gesondert dargestellten Hebemechanismus in vertikaler Richtung aufeinander zubewegt beziehungsweise voneinander abgehoben werden. Zudem ist eine ebenfalls nicht dargestellte Führungsschiene vorgesehen, mittels derer ein Werkzeugteil 4a quer zum anderen Werkzeugteil 4b bewegt werden kann.

Das Organoblech 3 besteht in bekannter Weise aus einem endlosfaserverstärkten, thermoplastischen Kunststoff. Wie aus Figur 1 ersichtlich weist das Organoblech 3 eine dreidimensionale Wannenform auf. Diese Wannenform wurde durch einen Umformvorgang in einem Umformwerkzeug erhalten, in dem das gesamte Organoblech 3 auf so hohe Temperaturen erhitzt wurde, dass dieses flexibel und beliebig formbar wurde. Danach wurde das Organoblech 3 abgekühlt, z.B. auf Raumtemperatur, so dass das Organoblech 3 in der in Figur 1 dargestellten Form erstarrt, zumindest aber im Wesentlichen formstabil ist.

Das so ausgebildete, erfasste Organoblech 3 bildet den Ausgangspunkt zur Durchführung des in den Figuren 1 bis 6 dargestellten Verfahrens.

Figur 1 zeigt die Werkzeugteile 4a, 4b in ihrer ausgefahrenen Position. Das erste Werkzeugteil 4a weist eine Aufnahme 5 auf, die an die Kontur des Organoblechs 3 angepasst ist. Das auf Raumtemperatur gehaltene Organoblech 3 wird in einem ersten Schritt in diese Aufnahme 5 eingelegt (Figur 2). Dabei liegt die Oberfläche des Organoblechs 3, auf welche insbesondere zur Versteifung vorzugsweise Rippenstrukturen aus Kunststoff aufgebracht werden sollen, frei.

Zur Aufbringung der Rippenstruktur oder andere Auflagen weist das zweite Werkzeugteil 4b an seiner dem ersten Werkzeugteil 4a zugewandten Frontseite ausmündende Hohlräume 6 auf, in welche zur Durchführung eines Spritzgussprozesses Kunststoff einspritzbar ist. Die Anordnungen und Dimensionen der eine Hohlraumstruktur bildenden Hohlräume 6 geben die Geometrie der auf dem Organoblech 3 zu erzeugenden Rippenstruktur vor.

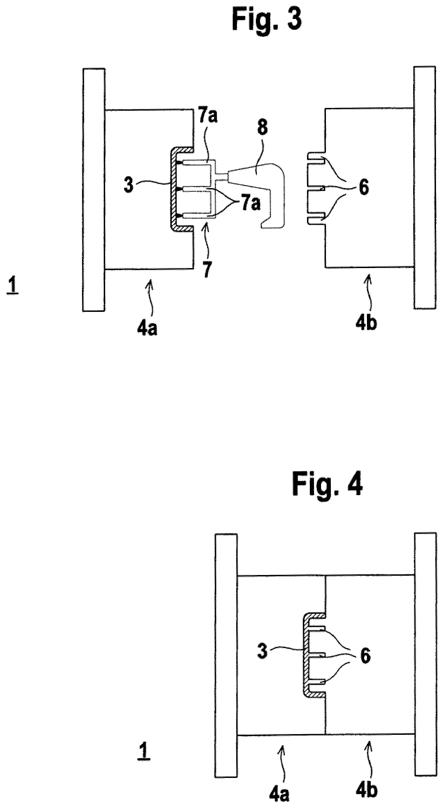

In einem darauffolgenden Verfahrensschritt werden bei dem in der Aufnahme 5 liegenden Organoblech 3 auf dessen freiliegender Oberfläche selektiv nur die Stellen erhitzt, auf welchen die Rippenstrukturen anzubringen sind. Wie aus Figur 3 ersichtlich ist hierzu als separate Einheit ein Heizelement 7 vorgesehen. Das Heizelement 7 weist eine Anordnung von Kanälen 7a auf, in welche von einer Heizvorrichtung 8 Heißgas, insbesondere Stickstoff einleitbar ist. Die Kanäle 7a weisen exakt die Geometrie der die Rippenstrukturen vorgebenden Hohlräume 6 des Werkzeugteils 4b auf. Das Heizelement 7 wird, wie in Figur 3 dargestellt, so vor dem Organoblech 3 positioniert, dass durch Ausleitung von Heißgas über die Kanäle 7a exakt und ausschließlich die Stellen erwärmt werden, auf welchen die Rippenstrukturen anzubringen sind. Mit dem Heizelement 7 wird dabei auf eine Temperatur von mehr als 180°C aufgeheizt, so dass die thermoplastische Matrix des Organoblechs 3 lokal an den erhitzten Stellen erwicht und insbesondere zumindest nahezu aufgeschmolzen wird.

Nach dem lokalen Aufheizen der Stellen des Organoblechs 3 wird das Heizelement 7 aus dem Bereich der Spritzgussform 1 entfernt. Dann wird durch Zusammenfahren der Werkzeugteile 4a, 4b die Spritzgussform 1 geschlossen. Figur 4 zeigt die so geschlossene Spritzgussform 1. Bei geschlossener Spritzgussform 1 wird in einem Spritzgussvorgang Kunststoff in die Hohlräume 6 des Werkzeugteils 4b zur Ausbildung der Rippenstruktur eingespritzt. Der in die Hohlräume 6 eingespritzte Kunststoff trifft exakt auf die erwärmten Stellen des Organoblechs 3. Dadurch wird eine besonders feste, haltbare Verbindung der so erzeugten Rippenstruktur auf dem Organoblech 3 erhalten.

Nach Erkalten des Kunststoffs und der erwärmten Stellen des Organoblechs 3 wird, wie in Figur 5 dargestellt, die Spritzgussform 1 durch Auseinanderfahren der Werkzeugteile 4a, 4b geöffnet, so dass das fertiggestellte Bauteil 2 bestehend aus dem Organoblech 3 und auf dessen Oberseite aufgebrachten, die Rippenstruktur bildenden Rippen 9 in der Aufnahme 5 freiliegt.

Dann wird, wie in Figur 6 dargestellt, das fertige Bauteil 2 mit einer nicht dargestellten Auswurfeinheit aus dem Werkzeugteil 4a entfernt. Dann können von neuem die Verfahrensschritte der Figuren 1 bis 5 durchgeführt werden um ein weiteres Bauteil 2 herzustellen.

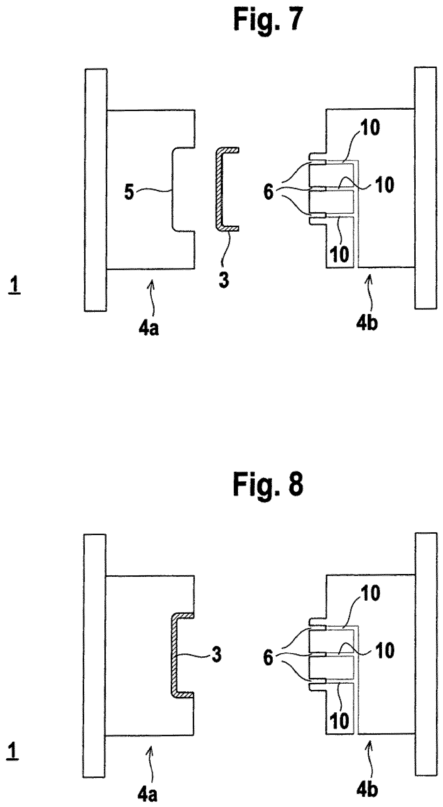

Die Figuren 7 bis 13 zeigen eine weitere Vorrichtung zur Durchführung einer Variante des erfindungsgemäßen Verfahrens. Der Aufbau der Vorrichtung der Figuren 7 bis 13 mit einer Spritzgussform 1 entspricht weitgehend der Ausführungsform der Figuren 1 bis 6. Ein Unterschied besteht darin, dass nun die Mittel zur lokalen Erwärmung vorgegebener Stellen des Organoblechs 3 in der Spritzgussform 1, nämlich in das Werkzeugteil 4b selbst integriert sind. Diese Mittel sind von Heizkanälen 10 gebildet, die direkt zu den Hohlräumen 6 zur Generierung der Rippenstruktur führen. Über eine Heizvorrichtung 8 kann Heißgas über die Heizkanäle 10 in die Hohlräume 6 geleitet werden.

Figur 7 zeigt wieder den Ausgangspunkt des Verfahrens, nämlich ein vorgeformtes, auf Raumtemperatur befindliches Organoblech 3 und eine Spritzgussform 1 mit auseinandergefahrenen Werkzeugteilen 4a, 4b.

Figur 8 zeigt den zweiten Schritt, nachdem das Organoblech 3 in die Aufnahme 5 des Werkzeugteils 4a eingelegt wurde.

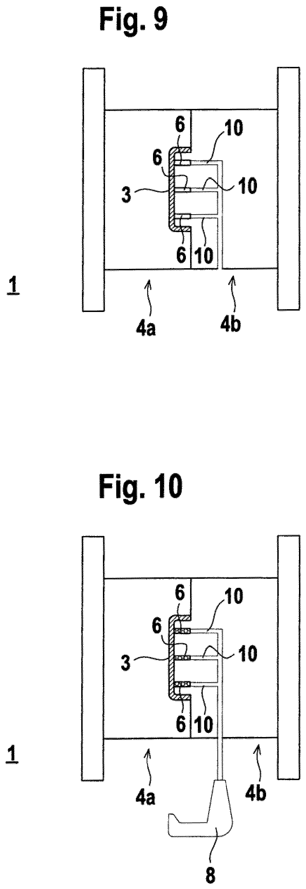

Anschließend wird, wie Figur 9 zeigt, die Spritzgussform 1 durch Zusammenfahren der Werkzeugteile 4a, 4b geschlossen.

In diesem geschlossenen Zustand der Spritzgussform 1 erfolgt, wie in Figur 10 dargestellt, das selektive Erhitzen von Stellen des Organoblechs 3 auf eine Temperatur größer als 180°C, so dass das Organoblech 3 lokal nur an diesen Stellen vom weitgehend starren in einen erweichten Zustand überführt wird.

Hierzu wird die Heizvorrichtung 8 an den Einlass der Heizkanäle 10 gebracht, so dass Heißgas durch die Heizkanäle 10 in die Hohlräume 6 geleitet wird. Mit dem in die Hohlräume 6 geleiteten Heißgas wird das Organoblech 3 exakt und ausschließlich an den Stellen erwärmt, an welchen nachfolgend die Rippenstrukturen aufgebracht werden.

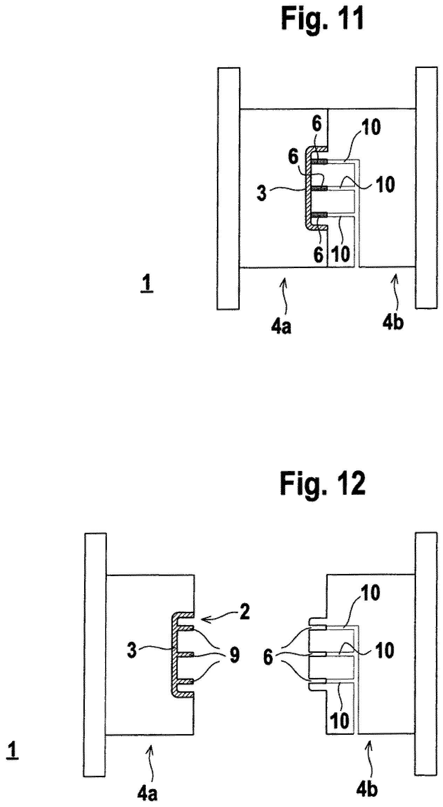

Die Aufbringung der Rippenstrukturen erfolgt wieder in einem Spritzvorgang, der in Figur 11 dargestellt wird. Zunächst werden die Heizkanäle 10 durch nicht dargestellte Mittel geschlossen, wodurch der Aufwärmvorgang des Organoblechs 3 beendet ist. Dann wird in bekannter Weise durch gleichfalls nicht dargestellte Mittel Kunststoff in die Hohlräume 6 eingespritzt, um die Rippenstruktur auf dem Organoblech 3 zu erzeugen.

Nach Erhalten des so fertiggestellten Bauteils 2 bestehend aus dem Organoblech 3 mit darauf angeordneten Rippen 9 wird, wie in Figur 12 dargestellt, die Spritzgussform 1 durch Auseinanderfahren der Werkzeugteile 4a, 4b geöffnet. Dann liegt das Bauteil 2 offen in der Aufnahme 5 des Werkzeugteils 4a.

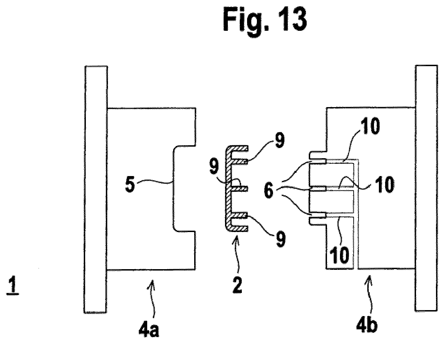

Abschließend wird, wie in Figur 13 dargestellt, das fertige Bauteil 2 mit einer nicht dargestellten Auswurfeinheit aus dem Werkzeugteil 4a entfernt. Dann können von neuem die Verfahrensschritte gemäß den Figuren 7 bis 12 durchgeführt werden, um ein weiteres Bauteil 2 herzustellen.

## Patentansprüche

1. Verfahren zur Herstellung eines Bauteils (2), welches einen von einem Organoblech (3) gebildeten Träger aufweist, an den mindestens eine Kunststoffauflage (6) angeformt ist,
**dadurch gekennzeichnet, dass** das Organoblech (3)in eine mindestens zwei Formwerkzeugteile (4a, 4b) aufweisende, öffen- und schließbare Spritzgussform (1) eingelegt wird, dass dann selektiv mindestens eine in der Spritzgussform freiliegende Stelle des Organoblechs, an welche die mindestens eine Kunststoffauflage (6) anzuformen ist, erhitzt wird, und dass dann bei geschlossener Spritzgussform mittels eines Spritzgussverfahrens die mindestens eine Kunststoffauflage auf die mindestens eine vorerhitzte Stelle des Organoblechs aufgetragen wird.

2. Verfahren nach Anspruch 1, **dadurch gekennzeichnet, dass** ein Organoblech (3) mit einer thermoplastischen Matrix verwendet wird.

3. Verfahren nach Anspruch 1 oder 2, **dadurch gekennzeichnet, dass** das Organoblech (3) als mittels eines Umformwerkzeugs geformtes Teil in die geöffnete Spritzgussform (1) eingelegt wird.

4. Verfahren nach den Ansprüchen 2 und 3, **dadurch gekennzeichnet, dass** das Organoblech (3) als vorgeformtes Teil in die geöffnete Spritzgussform (1) eingelegt und durch Schließen der Spritzgussform umgeformt und in die Gestalt des Trägers gebracht wird.

5. Verfahren nach einem der Ansprüche 1 bis 4, **dadurch gekennzeichnet, dass** für die Erzeugung der Kunststoffauflage (6) ein spritzfähiges Material verwendet wird, welches zumindest überwiegend aus einem thermoplastischen Kunststoff besteht.

6. Verfahren nach Anspruch 5, **dadurch gekennzeichnet, dass** an das Organoblech (3) eine Kunststoffauflage (6) mit einer Struktur angespritzt wird, durch welche sich die Kunststoffauflage mit mindestens einem thermoplastischen Bereich mindestens eines zweiten Bauteils verschweißen lässt.

7. Verfahren nach einem der Ansprüche 1 bis 6, **gekennzeichnet durch** die Erzeugung einer Kunststoffauflage (6) mit einer Rippenstruktur.

8. Verfahren nach einem der Ansprüche 1 bis 7, **dadurch gekennzeichnet, dass** das Organoblech (3) in einem Zustand in das Spritzgusswerkzeug (1) eingelegt wird, in dem das Organoblech zumindest im Wesentlichen formstabil ist.

9. Verfahren nach einem der Ansprüche 1 bis 8, **dadurch gekennzeichnet, dass** das Organoblech (3) beim Einlegen in die Spritzgussform (1) Raumtemperatur aufweist.

10. Verfahren nach einem der Ansprüche 1 bis 9, **dadurch gekennzeichnet, dass** mindestens ein Formwerkzeugteil (4a) eine Aufnahme (5) aufweist, in die das Organoblech (3) so einlegbar ist, dass dessen mindestens eine Stelle, an der die Kunststoffauflage (6) anzubringen ist, freiliegt, und dass das oder die weiteren Formwerkzeugteile (4a, 4b) Mittel zur Erzeugung der Kunststoffauflage aufweisen.

11. Verfahren nach einem der Ansprüche 1 bis 10, **dadurch gekennzeichnet, dass** für die selektive Erwärmung der mindestens einen freiliegenden Stelle des in der Spritzgussform (1) angeordneten Organoblechs (3) Heißgas verwendet wird.

12. Verfahren nach einem der Ansprüche 1 bis 11, **dadurch gekennzeichnet, dass** die mindestens eine selektiv erwärmte Stelle des Organoblechs (3) auf eine Temperatur oberhalb von 180 °C aufgeheizt ist, wenn die Kunststoffauflage (6) angespritzt wird.

13. Verfahren nach einem der Ansprüche 1 bis 12, **dadurch gekennzeichnet, dass** die selektive Erwärmung der mindestens einen Stelle des Organoblechs (3) mittels eines Heizelements (7) bewirkt wird, welches eine von den Formwerkzeugteilen (4a, 4b) unabhängige Einheit bildet.

14. Verfahren nach Anspruch 13, **dadurch gekennzeichnet, dass** das Heizelement (7) eine Anordnung von mindestens einem Heißgasauslass aufweist, die der Geometrie der Kunststoffauflage (6) entspricht.

15. Verfahren nach den Ansprüchen 7 und 14, **dadurch gekennzeichnet, dass** das Heizelement mehrere Heißgasauslässe aufweist, deren Anordnung der Geometrie der Rippenstruktur entspricht.

16. Verfahren nach Anspruch 14 oder 15, **dadurch gekennzeichnet, dass** bei auseinandergefahrenen Formwerkzeugteilen (4a, 4b) und in der Aufnahme (5) des ersten Formwerkzeugteils (4a) gelagertem Organoblech (3) das Heizelement (7) in den Zwischenraum zwischen den Formwerkzeugteilen eingefahren und so vor dem Organoblech positioniert wird, dass mit Heißgas aus dem mindestens einen Heißgasauslass des Heizelements selektiv die für die Kunststoffauflage (6) vorgesehene mindestens eine Stelle des Organoblechs aufgeheizt wird.

17. Verfahren nach einem der Ansprüche 1 bis 12, **dadurch gekennzeichnet, dass** Mittel zur selektiven Erwärmung der mindestens einen Stelle des Organoblechs (3) Bestandteile der Spritzgussform (1) sind.

18. Verfahren nach Anspruch 17, **dadurch gekennzeichnet, dass** als Mittel zur selektiven Erwärmung mindestens ein Heizkanal (10) vorgesehen ist, welcher in der Spritzgussform (1) vorgesehene Mittel zur Erzeugung der Kunststoffauflage (6) zugeordnet sind.

19. Verfahren nach Anspruch 18, **dadurch gekennzeichnet, dass** die Mittel zur Erzeugung der Kunststoffauflage (6) eine Hohlraumstruktur aufweisen, in welche Kunststoff eingespritzt wird, um die Kunststoffauflage (6) auf dem Organoblech (3) auszubilden, und dass der mindestens eine Heizkanal (10) in diese Hohlraumstruktur einmündet.

20. Verfahren nach Anspruch 19, **dadurch gekennzeichnet, dass** in einem ersten Schritt Heißgas über den mindestens einen Heizkanal (10) in die Hohlraumstruktur eingeleitet wird, um die daran angrenzende mindestens eine Stelle des Organoblechs (3) selektiv zu erwärmen, und dass in einem zweiten Schritt Kunststoff in die Hohlraumstruktur zur Ausbildung der Kunststoffauflage (6) eingespritzt wird.

21. Vorrichtung zur Durchführung des Verfahrens nach einem der Ansprüche 1 bis 20, **gekennzeichnet durch** eine Spritzgussform (1) umfassend ein Formwerkzeug mit mindestens zwei gegeneinander positionierbaren Formwerkzeugteilen (4a, 4b), wobei ein erstes Formwerkzeugteil (4a) eine Aufnahme (5) aufweist, in welches ein Organoblech (3) einlegbar ist, und **dadurch, dass** wenigstens ein weiteres Formwerkzeugteil (4b) Mittel zur Erzeugung einer Kunststoffauflage (6) auf dem Organoblech (3) aufweist, sowie durch Mittel zur selektiven Erwärmung mindestens einer Stelle des Organoblechs (3), an welcher die mindestens eine Kunststoffauflage anzubringen ist.

22. Vorrichtung nach Anspruch 21, **dadurch gekennzeichnet, dass** Mittel zur selektiven Erwärmung der mindestens einen Stelle des Organoblechs (3) von einem Heizelement (7) gebildet sind, welches eine von den Formwerkzeugteilen (4a, 4b) unabhängige Einheit bildet.

23. Vorrichtung nach Anspruch 21, **dadurch gekennzeichnet, dass** Mittel zur selektiven Erwärmung der mindestens einen Stelle des Organoblechs (3) als in einem Formwerkzeugteil (4a, 4b) verlaufende Heizkanäle (10) ausgebildet sind.

24. Bauteil mit einem Organoblech (3) und einer an diesem vorgesehenen und mit dem Organoblech stoffschlüssig verbundenen Kunststoffauflage (6), hergestellt durch das Verfahren nach einem der Ansprüche 1 bis 20.

25. Bauteil mit einem Formteil aus einem Organoblech (3), welches eine Hauptoberfläche mit vorgegebener Gestalt aufweist, an der mindestens eine Kunststoffauflage (6) angebracht und mit dem Organoblech-Formteil unmittelbar stoffschlüssig verbunden ist, **dadurch gekennzeichnet, dass** die Formteil-Hauptoberfläche in der Nachbarschaft der Kunststoffauflage ihre vorgegebene Gestalt ohne Deformationen aufweist.
